# FASCICULE DE BREVET EUROPEEN

(11) **EP 0 976 869 B1**
(45) Date de publication et mention de la délivrance du brevet: **26.10.2005**
(21) Numéro de dépôt: 99420155.6
(22) Date de dépôt: 08.07.1999
(51) Int. Cl.: D06N 7/00, B60N 3/04

(54) **Revêtement de sol notamment pour automobiles et procédé pour son obtention**
Bodenbelag insbesondere für Kraftfahrzeuge und Verfahren zu dessen Herstellung
Floor covering particularly for automobiles and process for producing the same

(30) Priorité: 28.07.1998 FR 9809807
(43) Date de publication de la demande: 02.02.2000
(73) Titulaire: TEXTILES ET PLASTIQUES CHOMARAT, 07160 Le Cheylard (FR)
(72) Inventeur: Baccus, Gérard, 07160 Accons (FR); Sanial, Philippe, 07160 St. Julien Labrousse (FR)
(74) Mandataire: Vuillermoz, Bruno

(56) Documents cités:
- WO-A-89/04760
- GB-A- 2 072 578
- US-A- 5 735 990
- DATABASE WPI Section Ch, Week 9320 Derwent Publications Ltd., London, GB; Class A18, AN 93-162069 XP002099051 & JP 05 092735 A (MITSUBISHI KASEI CORP), 16 avril 1993 (1993-04-16)
- DATABASE WPI Section Ch, Week 8451 Derwent Publications Ltd., London, GB; Class A18, AN 84-314765 XP002099052 & JP 59 196216 A (NIPPON PETROCHEMICALS CO LTD), 7 novembre 1984 (1984-11-07)
- DATABASE WPI Section Ch, Week 9037 Derwent Publications Ltd., London, GB; Class A14, AN 90-279692 XP002099053 & JP 02 197437 A (KOTOBUKIYA FRONTE K), 6 août 1990 (1990-08-06)
- DATABASE WPI Section Ch, Week 8412 Derwent Publications Ltd., London, GB; Class A18, AN 84-071064 XP002099054 & JP 59 024735 A (HAYASHI TELEMPU KK), 8 février 1984 (1984-02-08)
- DATABASE WPI Section Ch, Week 9343 Derwent Publications Ltd., London, GB; Class A84, AN 93-339472 XP002099055 & JP 05 246274 A (IKEDA BUSSAN CO), 24 septembre 1993 (1993-09-24)
- DATABASE WPI Section Ch, Week 9408 Derwent Publications Ltd., London, GB; Class A95, AN 94-061836 XP002099056 & JP 06 016081 A (HAYASHI GIJUTSU KENKYUSHO KK), 25 janvier 1994 (1994-01-25)

## Description

### Domaine Technique

Dans le secteur de l'automobile, le plancher du véhicule, que ce soit l'habitacle ou le coffre, est en général recouvert d'un revêtement ayant pour but non seulement d'assurer la finition, mais également de réaliser une isolation tant phonique que thermique.

L'invention porte sur un nouveau type de revêtement utilisable pour une telle application ; elle concerne également un procédé de fabrication.

### Techniques antérieures

A ce jour, pour réaliser ces revêtements, on utilise en général des revêtements de sol conventionnels constitués par exemple par une structure textile du type feutre, tapis aiguilleté, moquette ou autre, associée éventuellement à une sous-couche en mousse comme cela ressort du GB-A-2 072 578 ou d'une sous couche à base de polyéthylène basse densité, d'éthylène vinyl acétate et de charges telle que décrite dans les documents JP 05 092 735 et JP 59 024 735.

Par ailleurs, il a également été proposé de réaliser des revêtements constitués entièrement par une structure en caoutchouc qui est disposée soit directement contre le plancher du véhicule, soit sur une sous-couche intermédiaire isolante telle qu'un feutre.

En général, les utilisateurs ont une préférence pour les revêtements de sol de type textile, moquette notamment qui a cependant comme inconvénient de nécessiter un entretien plus fréquent et plus délicat à réaliser que pour les revêtements de type "caoutchouc".

Cela explique que pour faciliter l'entretien et améliorer la résistance aux frottements, on associe en général au revêtement textile des tapis en "caoutchouc" qui sont soit intégrés dans des zones prédéterminées de la structure textile, soit simplement rapportés sur cette dernière.

### Exposé de l'invention

L'invention vise à résoudre un problème qui n'a jamais été posé à ce jour, à savoir de pouvoir réaliser un revêtement de sol, notamment pour automobiles, constitué par un complexe dont une face est formée par une structure textile et dont l'autre face, constituée par une couche d'une matière plastique complexe qui soit parfaitement réversible, et ce en vue de réaliser des revêtements dont la face d'usage, visible, peut être formée par l'une ou l'autre des couches du complexe, voire même également, comme dans le cas du revêtement du plancher de l'habitacle d'un véhicule, de réaliser un revêtement de type « mixte », c'est-à-dire un revêtement comportant des zones dont la surface visible est constituée par la couche textile et, des zones dans lesquelles la face apparente est constituée par la couche de matière plastique, par exemple celles nécessitant un entretien fréquent et/ou devant présenter une résistance améliorée aux frottements

Or, on a trouvé, et c'est ce qui fait l'objet de la présente invention, un nouveau type de matériau particulièrement adapté pour réaliser le revêtement des parois internes d'un véhicule et plus particulièrement du plancher de l'habitacle et du coffre qui, non seulement, permet de remplir l'ensemble des conditions exigées pour une telle utilisation, à savoir, insonorisation phonique et thermique, conformabilité, résistance à l'abrasion et au poinçonnement, facilité d'entretien, ce matériau étant par ailleurs parfaitement réversible et permettant donc de résoudre le problème précité.

Par ailleurs, selon une forme préférentielle de réalisation un tel matériau peut être réalisé à partir de polymères synthétiques tels que polyoléfine, polyéthylène notamment qui favorisent le recyclage du produit.

D'une manière générale, le matériau conforme à l'invention est constitué par un complexe multicouches dont l'une des faces est formée par une structure textile et dont l'autre face est constituée par une couche d'une matière plastique et dans lequel la couche en matière plastique du complexe est à base d'une matière thermoplastique dense, sélectionnée dans la famille des polymères synthétiques à base de polyéthylène, **et il se caractérise** en ce que :
- la couche à base de polyéthylène est obtenue à partir d'une formulation type comportant 10 à 12 % de charges, par exemple carbonate de calcium, pour 83 à 58 % de polyéthylène basse densité et 5 à 30 % de polyéthylène haute densité ;
- la couche textile est constituée par une structure fibreuse de type "moquette" ;
- l'association des couches entre elles est réalisée par complexage des deux constituants lors de l'extrusion de la couche à base de polyéthylène, ledit complexage étant réalisé par calandrage immédiatement à la sortie de l'extrudeuse de ladite couche, alors que cette dernière est encore à température élevée ;
- la couche à base de polyéthylène présente un aspect de surface et une dureté permettant d'utiliser le complexe de manière réversible.

Les deux couches entrant dans la constitution du complexe conforme à l'invention seront adaptées en fonction des propriétés finales que l'on souhaite obtenir telles que résistance à l'abrasion et aux rayures, l'isolation thermique et/ou phonique.

Pour la couche à base de polyoléfine, la formulation type peut comporter 10 à 12 % de charges, par exemple carbonate de calcium, pour 83 à 58 % de polyéthylène basse densité et 5 à 30 % de polyéthylène haute densité, le polyéthylène haute densité apportant une augmentation de la dureté de surface donnant une meilleure résistance à la rayure.

Le poids au mètre carré de cette couche de surface peut être compris entre 100 et 800 g par mètre carré, voire même plus mais, en général il est de l'ordre de 300 à 500 g par mètre carré.

Le poids sera essentiellement adapté en fonction de l'état final que l'on veut donner à cette couche, et notamment au grain que l'on souhaite lui communiquer.

Concernant la couche textile, elle est constituée par une structure de type "moquette" réalisée par toutes techniques conventionnelles telles que tissage ou nappage/aiguilletage.

Les fibres rentrant dans la composition de cette structure fibreuse peuvent éventuellement être quelconques car on a constaté, qu'après le complexage conformément au procédé qui fait également partie de l'invention, que l'on obtenait une très bonne cohésion des deux couches entre elles même si les fibres sont à base d'une matière autre que le polypropylène.

Cependant lorsque l'on souhaite obtenir un complexe facilement recyclable, il est cependant avantageux de réaliser la couche textile à partir de fibres de polypropylène.

Comme autre type de fibres particulièrement adaptées pour réaliser la structure fibreuse complexe conforme à l'invention, on peut également citer les fibres de polyester.

La moquette réalisée recevra éventuellement un traitement d'imprégnation avec une composition à base de latex, polyéthylène ou autre qui peut favoriser l'adhérence des couches entre elles lors de l'opération de complexage.

Le poids en mètre carré de la couche fibreuse peut varier dans de grandes proportions, et sera en général compris entre 0,3 à 5 kg par mètre carré, et peut éventuellement être supérieur.

En général, un poids compris entre 0,5 kg par mètre carré et 1,5 kg par mètre carré convient pour la plupart des applications.

L'invention concerne également, un procédé permettant la réalisation d'un tel complexe, ledit procédé consistant :
- à disposer, à la sortie d'une extrudeuse d'une feuille à base d'une composition de polyéthylène, une calandre comportant de préférence un cylindre en acier et un cylindre revêtu d'une surface à base de caoutchouc ;
- à introduire dans l'espace compris entre les cylindres de la calandre, une nappe textile de type "moquette", préalablement réalisée et,
- à associer au niveau de la calandre la structure textile et la feuille extrudée alors que cette dernière est à une température comprise entre 200 et 250° C et de préférence 230°C.

Eventuellement, afin de favoriser l'adhésion des deux constituants entre eux, la structure textile préalablement préparée peut être préchauffée avant complexage.

Selon une forme préférentielle de mise en oeuvre de ce procédé, la nappe fibreuse préalablement préparée est amenée à l'intérieur de la calandre par passage sur le cylindre caoutchouté, ce qui permet d'absorber les irrégularités de ladite nappe alors que la feuille extrudée est, quant à elle, en contact avec le cylindre en acier.

En procédant d'une telle manière, il est ainsi possible d'appliquer un grainage à la surface de la feuille extrudée et, également, en réglant la température du cylindre en acier on peut également faire varier la brillance de cette couche de matière.

En effet, la feuille est d'autant plus mate que la température est élevée, cette température étant cependant réglée au maximum à environ 80°C.

### Manière de réaliser l'invention

L'invention et les avantages qu'elle apporte seront cependant mieux compris grâce aux exemples concrets de réalisation donnés ci-après à titre indicatif, mais non limitatif.

### Exemple 1

On réalise un complexe conforme à l'invention comportant une nappe textile préalablement réalisée de type "moquette" obtenu par nappage/aiguilletage à partir de fibres de polypropylène.

Cette nappe pèse 650 g par mètre carré, a un aspect feutré et a une épaisseur 3 mm.

A ce support textile, sur une installation de calandrage disposée en aval d'une extrudeuse, on associe une feuille extrudée constituée d'une composition comportant :
- 12 % de charge carbonate de calcium ;
- 78 % de polyéthylène basse densité et;
- 10 % de polyéthylène haute densité.

Le poids de la feuille extrudée est de 500 g par mètre carré et, lors de l'association par calandrage, elle est en contact avec le cylindre en acier de la calandre. Lors du contact feuille textile/feuille extrudée, la température de cette dernière est de 230° C.

La vitesse de rotation des rouleaux de la calandre est telle que l'on obtient une production de 5 m par minute. La température du cylindre en acier de la calandre est de 30° C permettant d'obtenir une brillance d'intensité moyenne. Si le cylindre peut être lisse, de préférence il présentera un état de surface permettant de réaliser un grainage de la couche à base de polyéthylène.

Après calandrage, on obtient un complexe pesant 1150 g par mètre carré, et dont l'épaisseur totale est de 3,5 mm.

### Exemple 2

On répète l'exemple précédent, si ce n'est que la moquette textile est une moquette, également réalisée par nappage/aiguilletage mais à base de fibres de polyester.

Une telle moquette reçoit un traitement d'imprégnation à partir d'une composition à base de polyéthylène ou de styrène budadiène.

Elle pèse 750 g par mètre carré et a une épaisseur 4 mm.

La feuille extrudée est identique à celle de l'exemple 1 et l'opération de calandrage est réalisée dans les mêmes conditions.

Dans les deux cas, on obtient un complexe comportant une couche textile et une couche à base de matières thermoplastiques, les deux couches étant intimement liées l'une à l'autre et ne pouvant pas être délaminées.

Après réalisation du complexe, ce dernier peut être réceptionné soit sous la forme d'un enroulement comportant une grande longueur de matière, soit découpé sous la forme de plaques.

Un tel matériau peut être utilisé comme un revêtement du plancher d'un véhicule, la face apparente pouvant être indifféremment la face textile ou la face plastique ce qui permet, en fonction des zones où doit être disposé le revêtement et/ou les contraintes auxquelles il est soumis, de pouvoir, à partir d'un seul et même matériau, réaliser un revêtement dont la face apparente peut être soit textile, soit plastique.

## Revendications

1. Matériau utilisable notamment comme revêtement du plancher de l'habitacle et du coffre d'un véhicule constitué par un complexe multicouches dont l'une des faces est formée par une structure textile et dont l'autre face est constituée par une couche d'une matière plastique et dans lequel la couche en matière plastique du complexe est à base d'une matière thermoplastique dense, sélectionnée dans la famille des polymères synthétiques à base de polyéthylène, **caractérisé en ce que** :
- la couche à base de polyéthylène est obtenue à partir d'une formulation type comportant 10 à 12 % de charges, par exemple carbonate de calcium, pour 83 à 58 % de polyéthylène basse densité et 5 à 30 % de polyéthylène haute densité ;
- la couche textile est constituée par une structure fibreuse de type "moquette" ;
- l'association des couches entre elles est réalisée par complexage des deux constituants lors de l'extrusion de la couche à base de polyéthylène, ledit complexage étant réalisé par calandrage immédiatement à la sortie de l'extrudeuse de ladite couche, alors que cette dernière est encore à température élevée ;
- la couche à base de polyéthylène présente un aspect de surface et une dureté permettant d'utiliser le complexe de manière réversible.

2. Matériau selon la revendication 1, **caractérisé en ce que** la couche à base de polyéthylène pèse entre 100 et 800 g par mètre carré.

3. Matériau selon l'une des revendications 1 et 2, **caractérisé en ce que** la couche textile est à base de fibres de polypropylène.

4. Matériau selon l'une des revendications 1 et 2, **caractérisé en ce que** la couche textile est à base de fibres de polyester.

5. Matériau selon l'une des revendications 3 et 4, **caractérisé en ce que** la couche textile reçoit un traitement d'imprégnation avec une composition à base de latex, polyéthylène avant d'être complexée avec la couche en matière plastique.

6. Matériau selon l'une des revendications 1 à 5, **caractérisé en ce que** la couche fibreuse pèse entre 0,3 à 5 kg par mètre carré.

7. Procédé permettant la réalisation de complexes réversibles selon l'une des revendications 1 à 7, qui consiste :
- à disposer, à la sortie d'une extrudeuse d'une feuille à base d'une composition de polyéthylène, une calandre comportant de préférence un cylindre en acier et un cylindre revêtu d'une surface à base de caoutchouc ;
- à introduire dans l'espace compris entre les cylindres de la calandre, une nappe textile de type "moquette", préalablement réalisée et,
- à associer au niveau de la calandre la structure textile et la feuille extrudée alors que cette dernière est à une température comprise entre 200 et 250° C et de préférence 230°C.

8. Procédé selon la revendication 7, **caractérisé en ce que** l'on réalise un grainage à la surface de la feuille extrudée et/ou on fait varier la brillance de cette couche de matière en réglant la température des cylindres en acier de la calandre, la feuille étant d'autant plus mate que la température est élevée et étant au maximum d'environ 80°C.

## Patentansprüche

1. Material, das insbesondere als Belag des Bodens des Fahrgastraums und des Kofferraums eines Fahrzeugs verwendbar ist und aus einem Mehrschicht-Verbundwerkstoff besteht, dessen eine Seite aus einer Textilstruktur gebildet ist und dessen andere Seite aus einer Kunststoffmaterial-Schicht besteht, wobei die Kunststoffmaterial-Schicht des Verbundwerkstoffs auf einem dichten thermoplastischen Material basiert, das ausgewählt ist aus der Gruppe der synthetischen Polymere auf Polyethylen-Basis, **dadurch gekennzeichnet, dass**
- die Schicht auf Polyethylen-Basis aus einem Formulierungstyp erhalten wird, der 10 bis 12% Füllmaterialien, z.B. Calciumcarbonat, auf 83 bis 58% Polyethylen niedriger Dichte und 5 bis 30% Polyethylen hoher Dichte umfasst;
- die Textilschicht aus einer Faserstruktur vom Typ "Teppichboden" besteht;
- das Miteinanderverbinden der Schichten durch Verbundbildung der zwei Bestandteile bei der Extrusion der Schicht auf Polyethylen-Basis durchgeführt wird, wobei die Verbundbildung durch Kalandrieren unmittelbar am Ausgang des Extruders dieser Schicht durchgeführt wird, während dieselbe noch eine erhöhte Temperatur aufweist;
- die Schicht auf Polyethylen-Basis ein Oberflächenbild und eine Härte aufweist, die die beidseitige Verwendung des Verbundwerkstoffs ermöglichen.

2. Material nach Anspruch 1, **dadurch gekennzeichnet, dass** die Schicht auf Polyethylen-Basis zwischen 100 und 800 g pro Quadratmeter wiegt.

3. Material nach einem der Ansprüche 1 und 2, **dadurch gekennzeichnet, dass** die Textilschicht auf Polypropylen-Fasem basiert.

4. Material nach einem der Ansprüche 1 und 2, **dadurch gekennzeichnet, dass** die Textilschicht auf Polyester-Fasern basiert.

5. Material nach einem der Ansprüche 3 und 4, **dadurch gekennzeichnet, dass** die Textilschicht eine Imprägnierungsbehandlung mit einer Zusammensetzung auf Basis von Latex, Polyethylen erhält, bevor sie mit der Kunststoffmaterial-Schicht verbunden wird.

6. Material nach einem der Ansprüche 1 bis 5, **dadurch gekennzeichnet, dass** die Faserschicht 0,3 bis 5 kg pro Quadratmeter wiegt.

7. Verfahren, das die Herstellung beidseitig verwendbarer Verbundwerkstoffe nach einem der Ansprüche 1 bis 7 ermöglicht, umfassend:
- das Anordnen eines Kalanders, der vorzugsweise einen Stahlzylinder und einen Zylinder umfasst, der mit einer Oberfläche auf Kautschuk-Basis ausgekleidet ist, am Ausgang eines Extruders für eine Folie auf der Basis einer Polyethylen-Zusammensetzung;
- das Einführen einer vorher hergestellten Textillage vom Typ "Teppichboden" in den Raum zwischen den Zylindern des Kalanders; und
- das Verbinden der Textilstruktur und der extrudierten Folie im Bereich des Kalanders, wobei die Letztere eine Temperatur zwischen 200 und 250°C und vorzugsweise von 230°C aufweist.

8. Verfahren nach Anspruch 7, **dadurch gekennzeichnet, dass** der Oberfläche der extrudierten Folie eine Körnigkeit verliehen und/oder der Glanz dieser Materialschicht variiert wird, indem die Temperatur der Stahlzylinder des Kalanders gesteuert wird, wobei die Folie um so matter ist, je höher die Temperatur ist und dieselbe maximal etwa 80°C beträgt.

## Claims

1. Material that can be used particularly as a covering for the passenger compartment and boot of a vehicle, constituted by a multilayer laminate of which one surface is formed by a textile structure and the other is constituted by a layer of a plastic material wherein the layer of plastic material of the laminate is based on a dense thermoplastic material chosen from the group of polyethylene-based synthetic polymers, **characterised in that**:
- the polyethylene-based layer is obtained using a standard formulation comprising 10 to 12% of fillers, for example calcium carbonate, for 83 to 58% low-density polyethylene and 5 to 30% high-density polyethylene,
- the textile layer is constituted by a carpet-type fibrous structure,
- the association of layers is carried out by laminating the two constituents during the extrusion of the polyethylene-based layer, said laminating being achieved by calendering immediately on outlet of the extruder of said layer while the layer is still at a high temperature,
- the polyethylene-based layer has a surface appearance and hardness that enable the laminate to be used reversibly.

2. Material as claimed in claim 1 **characterised in that** the polyethylene-based layer weighs between 100 and 800 g per square metre.

3. Material as claimed in any of claims 1 and 2 **characterised in that** the textile layer is based on polypropylene fibres.

4. Material as claimed in any of claims 1 and 2 **characterised in that** the textile layer is based on polyester fibres.

5. Material as claimed in any of claims 3 and 4 **characterised in that** the textile layer receives an impregnation treatment with a latex and/or polyethylene-based composition before being laminated with the plastic material layer.

6. Material as claimed in any of claims 1 to 5 **characterised in that** the fibrous layer weighs between 0.3 and 5 kg per square metre.

7. Process for producing reversible laminates of any of claims 1 to 7 consisting in:
- disposing at the outlet of a polyethylene-based composition sheet extruder a calender preferably comprising one steel cylinder and another cylinder coated with a rubber-based surface,
- introducing a previously produced carpet-type textile structure into the space between the two cylinders of the calender, and
- bringing together in the calender the textile structure and the extruded sheet while the latter is at a temperature of between 200 and 250°C, preferably 230°C.

8. Process as claimed in claim 7 **characterised in that** the surface of the extruded sheet is grained and/or the shininess of this layer of material is varied by controlling the temperature of the steel cylinders of the calender, the sheet having a more matt appearance the higher the temperature used, the maximum temperature being around 80°C.
